# EUROPEAN PATENT APPLICATION

(11) **EP 4 847 313 A1**
(43) Date of publication of application: **02.12.2026**
(21) Application number: 25227543.3
(22) Date of filing: 30.12.2025
(51) Int. Cl.: B60N 3/00

(54) **ADJUSTING MECHANISM, TABLE, AND VEHICLE**

(30) Priority: 30.05.2025 CN 202510729052
(71) Applicant: Xiaomi EV Technology Co., Ltd., Beijing 100176 (CN)
(72) Inventor: LIU, Yong, Beijing, 100176 (CN); CAO, Guangqiang, Beijing, 100176 (CN)
(74) Representative: Stöckeler, Ferdinand

(57) **Abstract**

The present invention relates to an adjusting mechanism, a table and a vehicle. The adjusting mechanism includes a first mounting bracket (10), a second mounting bracket (20), and a drive rod (30). The first mounting bracket (10) is configured to be connected to a table leg. The second mounting bracket (20) is configured for mounting of a tabletop. The second mounting bracket (20) is configured to be rotatably connected to the first mounting bracket (10) through the drive rod (30); and the drive rod (30) is configured to be movably connected to the first mounting bracket (10) in an axial direction of the drive rod (30), so that the adjusting mechanism is able to trigger extension and retraction of the table leg in a height direction by movement of the drive rod (30) in the axial direction of the drive rod.

## Description

### TECHNICAL FIELD

The present invention relates to the technical field of vehicle components, in particular to an adjusting mechanism, a table and a vehicle.

### BACKGROUND OF THE INVENTION

With the development of society, people have higher demands for the functional diversity, height adjustment and convenience of a flipping angle of tables. However, tables in the related art still fail to meet these requirements.

### SUMMARY OF THE INVENTION

To overcome at least part of the problems in the related art, the present invention provides an adjusting mechanism, a table and a vehicle.

According to a first aspect of embodiments of the present invention, an adjusting mechanism is provided. The adjusting mechanism includes a first mounting bracket, a second mounting bracket, and a drive rod;

The first mounting bracket is configured to be connected to a table leg, the second mounting bracket is configured for mounting of a tabletop, and the second mounting bracket is configured to be rotatably connected to the first mounting bracket through the drive rod; and

the drive rod is configured to be movably connected to the first mounting bracket in an axial direction of the drive rod, so that the adjusting mechanism is able to trigger extension and retraction of the table leg in a height direction by movement of the drive rod in the axial direction of the drive rod.

The adjusting mechanism integrates height adjustment and flipping functions. When the adjusting mechanism is applied to the table, the height and the flipping angle of the tabletop may be adjusted, such that the table integrates a lifting and falling function (i.e., the height adjustment function) and the flipping function, which is conducive to enhancing the user experience.

When the height of the tabletop needs to be adjusted, that is, lifting and falling of the table are adjusted, the drive rod can be made to move in its own axial direction to trigger extension and retraction of the table leg in a height direction (i.e., the height direction of the table). Through extension and retraction of the table leg in the height direction, the adjusting mechanism and the tabletop are driven to move in the height direction, so that the height of the tabletop is adjusted, and the operation is convenient.

In some possible implementations, the adjusting mechanism further includes a height adjustment handle connected to a first end of the drive rod away from the first mounting bracket, and the height adjustment handle is configured to make the drive rod move in the axial direction of the drive rod.

Thus, when the height of the tabletop needs to be adjusted, the drive rod may move in the axial direction of the drive rod through the height adjustment handle, so as to trigger extension or retraction of the table leg in the height direction (i.e., the height direction of the table). By providing the height adjustment handle, it is convenient for a user to move the drive rod in the axial direction.

In some possible implementations, the adjusting mechanism further includes a pushing member connected to the second mounting bracket.

The height adjustment handle is configured to be rotatably disposed on the drive rod in a sleeving manner, and the first end of the drive rod has an axial limiting part.

The pushing member is configured to make the drive rod be able to move in the axial direction of the drive rod under the action of the axial limiting part in a case of a rotation operation of the height adjustment handle around the drive rod.

During rotation of the height adjustment handle, the pushing member pushes the height adjustment handle to move away from the pushing member in the axial direction of the drive rod, the height adjustment handle pushes the axial limiting part of the drive rod during movement, then the end of the drive rod away from the axial limiting part moves toward the pushing member in the axial direction of the drive rod, and during movement of the drive rod, extension and retraction of the table leg in the height direction are triggered.

In some possible implementations, one of the height adjustment handle and the pushing member has at least one groove, and the other has at least one bump.

The pushing member is configured to be able to make the bump withdraw from the groove during rotation of the height adjustment handle around the drive rod, so as to drive the drive rod to move in the axial direction of the drive rod by the axial limiting part.

With this design, during rotation of the height adjustment handle, as the bump withdraws from the groove, the height adjustment handle moves away from the pushing member in the axial direction of the drive rod, and pushes the axial limiting part, so that the end of the drive rod away from the axial limiting part moves toward the pushing member in the axial direction of the drive rod, and during movement of the drive rod, extension and retraction of the table leg in the height direction are triggered. Through the cooperation method of the groove and the bump, the distance of the height adjustment handle relative to the pushing member in the axial direction of the drive rod can be adjusted, so that the design structure that drives the axial movement of the drive rod, the design features a simple structure, and the operation is convenient.

In some possible implementations, the grooves have first stop surfaces and first wedge-shaped surfaces that are disposed at intervals in a circumferential direction of the drive rod; and
the bumps have second stop surfaces and second wedge-shaped surfaces that are disposed at intervals in the circumferential direction of the drive rod;
the first stop surfaces are configured to stop the second stop surfaces to lock the bumps within the grooves;
the first wedge-shaped surfaces are configured to cooperate with the second wedge-shaped surfaces to make the bumps be able to withdraw from the grooves.

With this design, the grooves may lock the bumps in an inserted state through the cooperation of the first stop surfaces and the second stop surfaces, and the bumps can smoothly withdraw from the grooves during rotation of the height adjustment handle through the cooperation of the first wedge-shaped surfaces and the second wedge-shaped surfaces.

In some possible implementations, the adjusting mechanism further includes a pressure block, and the pressure block is movably connected to the first mounting bracket in the height direction;
the drive rod has an abutting inclined surface, and the abutting inclined surface is configured to make the pressure block move in the height direction during axial movement of the drive rod in the axial direction of the drive rod, so as to press and release a telescoping locking member of a telescopic member of the table leg.

**In** this way, movement of the drive rod in the axial direction of the drive rod may be converted into downward movement of the pressure block, so as to trigger the telescoping locking member (such as a button-type locking member). After the telescoping locking member is triggered, the telescopic member starts to drive an inner casing of the table leg to move upward along the table relative to an outer casing, so that the extension action is initiated, and the height of the tabletop is adjusted to another position.

**In** some possible implementations, the abutting inclined surface is an arc-shaped abutting inclined surface extending in the circumferential direction of the drive rod, and a projection of the abutting inclined surface in a projection plane perpendicular to the axial direction of the drive rod has a central angle greater than or equal to 90°.

Thus, during rotation of the drive rod around the first mounting bracket, it can be ensured that the pressure block maintains contact with the abutting inclined surface while rotating at an angle of 90° and more, and the reliability of the pressure block moving downward to trigger the telescoping locking member is ensured.

Or, the drive rod includes a conical section extending in the axial direction of the drive rod, and a conical surface of the conical section is constructed as the abutting inclined surface.

Since the abutting inclined surface is the conical surface, during rotation of the drive rod around the first mounting bracket, it can be ensured that the pressure block always maintains contact with the abutting inclined surface, and the reliability of the pressure block moving downward to trigger the telescoping locking member is ensured.

In some possible implementations, the pressure block includes a slideable part and an abutting column disposed above the slideable part;
the abutting column has an abutting conical surface, and the abutting conical surface is configured to cooperate with the abutting inclined surface;
the slideable part is slidably connected to the first mounting bracket in the height direction.

With this design, it is convenient for the pressure block to cooperate with the abutting inclined surface of the drive rod, it is also convenient for the pressure block to be connected to the first mounting bracket.

Furthermore, since the abutting column has the abutting conical surface, during the abutting cooperation with the abutting inclined surface of the drive rod, it can be ensured that the abutting column always maintains contact with the drive rod, which is beneficial to ensuring that the pressure block moves downward under the action of the drive rod.

In some possible implementations, the first mounting bracket has a guide slot extending in the height direction, and the slideable part slidably cooperates with the guide slot.

Thus, the reliability and balance of movement of the slideable part on the first mounting bracket are ensured.

In some possible implementations, the first mounting bracket includes a sleeve part and a mounting part. The sleeve part is configured to be connected to the telescopic member of the table leg;
the mounting part includes a first portion and a second portion, the second portion is connected between the first portion and the sleeve part, and the pressure block is movably connected to the second portion in the height direction;
the drive rod movably penetrates through the first portion in the axial direction of the drive rod.

With this design, connection with the table leg, mounting of the drive rod, and cooperation with the pressure block are facilitated, and interference can be avoided.

In some possible implementations, the first portion includes two lugs spaced apart and a connecting plate connecting the two lugs;
each of the two lugs has a mounting hole;
the drive rod movably penetrates through the mounting holes in the axial direction of the drive rod.

By providing the two lugs spaced apart to mount the drive rod, the structure is simple, and better support can be provided for the drive rod.

In some possible implementations, the adjusting mechanism further includes two socket members and two clamp rings;
the two socket members are spaced apart in the axial direction of the drive rod, each socket member includes a socket section and a limiting boss connected to one end of the socket section, and the drive rod movably penetrates through the socket sections in the axial direction of the drive rod;
the clamp rings are configured to be fixed to the outer circumference of the socket sections of the corresponding socket members, and each lug is configured to be limited between the corresponding limiting boss and the clamped ring in the axial direction of the drive rod.

By providing the socket members, it is equivalent to providing a bushing, which facilitates protection of the drive rod and the lugs, and at the same time facilitates axial movement of the drive rod. Additionally, through the cooperation of the limiting bosses of the socket members and the clamp rings, assembly with the lugs of the first mounting bracket can be achieved, and the connection between the drive rod and the first mounting bracket is achieved.

In some possible implementations, the adjusting mechanism further includes a fixed plate and an elastic return member;
the drive rod movably penetrates through the fixed plate in the axial direction of the drive rod, and a position of the fixed plate in the axial direction of the drive rod is fixed;
the drive rod has an abutting flange, and two ends of the elastic return member are configured to be connected to the abutting flange and the fixed plate, respectively;
the elastic return member is configured to provide a return force for the drive rod to return in the axial direction.

By providing the elastic return member to provide the return force, after the height of the tabletop is adjusted in place, the drive rod may be automatically returned by using the elastic return member, which is convenient and fast.

In some possible implementations, the second mounting bracket includes a first connecting part and a main body part;
the main body part is configured to be connected to the tabletop;
the first connecting part is configured to be connected to one end of the main body part; and
the first connecting part is configured to be rotatably connected to the first mounting bracket through the drive rod.

Thus, by making the first connecting part rotate relative to the drive rod, or by making the first connecting part and the drive rod rotate together relative to the first mounting bracket, the second mounting bracket may be flipped relative to the first mounting bracket, so that the flipping angle of the tabletop is adjusted.

In some possible implementations, the adjusting mechanism further includes a height adjustment handle and a pushing member;
the pushing member is configured to be connected to the first connecting part; and
the pushing member is configured to make the drive rod move in the axial direction of the drive rod in a case of a rotation operation of the height adjustment handle around the drive rod.

Thus, the pushing member may be connected to the tabletop through the main body part, and cooperate with the drive rod and the height adjustment handle through the first connecting part, which is not prone to generating interference.

In some possible implementations, the first connecting part has a first slot; and
the drive rod is configured to be circumferentially locked and axially movably penetrates through the first slot, so that the first connecting part is able to be rotatably connected to the first mounting bracket through the drive rod.

Through the cooperation of a side wall of the first slot and the drive rod, the drive rod and the first connecting part may rotate together during the flipping process of the tabletop. A lower end of the first slot may extend to a lower end surface of the first connecting part.

In some possible implementations, the second mounting bracket further includes a second connecting part connected to the other end of the main body part and is opposite to the first connecting part;
the adjusting mechanism further includes a third mounting bracket and a connecting shaft. The third mounting bracket is configured to be connected to an inner casing of the table leg; and
the connecting shaft penetrates through the second connecting part and is configured to be rotatably supported on the third mounting bracket, and the second connecting part is configured to be able to rotate relative to the third mounting bracket through the connecting shaft.

In this way, the first connecting part and the second connecting part of the second mounting bracket may be supported on the drive rod and the connecting shaft, respectively. The third mounting bracket may cooperate with the first mounting bracket to support two opposite ends of the second mounting bracket, which is beneficial to improving the reliability of support for the second mounting bracket.

When the flipping angle of the tabletop needs to be adjusted, the flipping adjustment handle may be used to drive the connecting shaft to rotate relative to the third mounting bracket around the axis of the connecting shaft, and drive the second connecting part to rotate, so that the entire second mounting bracket and the tabletop are driven to flip.

In some possible implementations, the adjusting mechanism further includes a flipping adjustment module, and the flipping adjustment module is on the third mounting bracket; and
the connecting shaft is configured to be connected to the flipping adjustment module and is configured to be unlockably circumferentially locked to the third mounting bracket through the flipping adjustment module.

By providing the flipping adjustment module to cooperate with the connecting shaft and the third mounting bracket, locking or unlocking of the second mounting bracket and the tabletop can be achieved. By separately providing the flipping adjustment module, locking methods can be designed according to requirements.

In some possible implementations, the third mounting bracket includes a first sleeve and a second sleeve that are connected. The first sleeve extends in the axial direction of the drive rod;
the second sleeve extends in the height direction, an upper end of the second sleeve communicates with an interior of the first sleeve, and a lower end of the second sleeve is configured to be connected to the telescopic member of the table leg;
a portion of the first mounting bracket is located in the first sleeve, and the other portion is located in the second sleeve; and
the flipping adjustment module is located in the first sleeve.

With this design, the first sleeve and the second sleeve are connected into a T-shaped sleeve, so that the adjustment module is convenient to mount, and at the same time, the structure is simple. Moreover, since the first sleeve is disposed on an outer side of the flipping adjustment module in a sleeving manner, the aesthetic degree is high.

A portion of the first mounting bracket may be located in the first sleeve, and the other portion is located in second sleeve. Thus, the first mounting bracket is convenient to mount. Moreover, since the first sleeve and the second sleeve are disposed on the outer side of the first mounting bracket in a sleeving manner, the aesthetic degree is high.

In some possible implementations, at least one clamping raised part is provided in the first sleeve; and
the adjusting mechanism further includes a fixed plate, the fixed plate has a clamping slot, and the clamping raised part is in clamping-fit with the clamping slot to achieve axial fixation of the fixed plate, where the fixed plate is configured to cooperate with an elastic return member of the adjusting mechanism to achieve axial return of the drive rod.

Through clamping fit between the clamping raised parts and the clamping slots, the fixing reliability is high, and the structure is simple.

In some possible implementations, a stop step is provided in the first sleeve, and the stop step is configured to axially stop the flipping adjustment module; and
the stop step has a clamping tongue, and the clamping tongue is configured to be in clamping-fit with a clamping slot of the flipping adjustment module to achieve circumferential fixation of a fixed part of the flipping adjustment module.

Thus, during the unlocking and locking process of the movable part and the fixed part, the reliability of circumferential fixation of the fixed part can be ensured, so that the reliability of unlocking and locking between the movable part and the fixed part is ensured.

In some possible implementations, the adjusting mechanism further includes a flipping adjustment handle and a drive plate;
the flipping adjustment handle is configured to be circumferentially fixedly disposed on the connecting shaft in a sleeving manner, and the drive plate is configured to be connected to the second connecting part; and
the flipping adjustment handle is configured to be able to drive the second connecting part to rotate through the drive plate, and to drive the connecting shaft to rotate and axially move, so that the connecting shaft is able to be circumferentially unlocked from the flipping adjustment module.

When the flipping angle of the tabletop needs to be adjusted, the flipping adjustment handle may be used to drive the connecting shaft to rotate relative to the third mounting bracket around the axis of the connecting shaft, and drive the second connecting part to rotate, so that the second mounting bracket and the tabletop are driven to flip.

According to a second aspect of the present invention, a table is provided. The table includes a tabletop, a table leg, and the adjusting mechanism described above.

A first mounting bracket is configured to be connected to the table leg, and the tabletop is mounted on a second mounting bracket.

According to a third aspect of the present invention, a vehicle is provided. The vehicle includes the table described above.

It is to be understood that the above general descriptions and later detailed descriptions are merely examples and illustrations, and cannot limit the present invention.

### BRIEF DESCRIPTION OF DRAWINGS

The accompanying drawings here, which are incorporated in and constitute a part of the specification, illustrate embodiments consistent with the present invention and together with the specification serve to explain the principles of the present invention.
FIG. 1 is a three-dimensional schematic diagram of a partial structure of a table according to an example.
FIG. 2 is a schematic exploded diagram of a partial structure of a table according to an example.
FIG. 3 is a schematic exploded diagram of a partial structure of a table from another perspective according to an example.
FIG. 4 is a three-dimensional schematic diagram of a partial structure of a table according to an example, where a third mounting bracket is not shown.
FIG. 5 is a three-dimensional schematic diagram of a partial structure of a table according to an example, where a third mounting bracket and an inner casing are not shown.
FIG. 6 is a three-dimensional schematic diagram of a height adjustment handle according to an example.
FIG. 7 is a three-dimensional schematic diagram of a pushing member according to an example.
FIG. 8 is a three-dimensional schematic diagram of a partial structure of an adjusting mechanism according to an example, where a flipping adjustment module and a drive rod are shown.
FIG. 9 is a three-dimensional schematic diagram of a pressure block according to an example.
FIG. 10 is a three-dimensional schematic diagram of a first mounting bracket according to an example.
FIG. 11 is a three-dimensional schematic diagram of a second mounting bracket according to an example.
FIG. 12 is a three-dimensional schematic diagram of a second mounting bracket from another perspective according to an example.
FIG. 13 is a three-dimensional schematic diagram of a third mounting bracket according to an example.
FIG. 14 is a three-dimensional schematic diagram of a third mounting bracket from another perspective according to an example.
FIG. 15 is a three-dimensional schematic diagram of a flipping adjustment handle according to an example.
FIG. 16 is a three-dimensional schematic diagram of a drive plate according to an example.
FIG. 17 is a block diagram of a vehicle according to an example.

### DETAILED DESCRIPTION OF THE INVENTION

Examples will be described in detail here, instances of which are illustrated in the accompanying drawings. When the following description refers to the accompanying drawings, unless otherwise indicated, the same numbers in different accompanying drawings indicate the same or similar elements. The implementations described in the following examples do not represent all implementations consistent with the present invention. Rather, they are merely instances of devices and methods consistent with some aspects of the present invention as detailed in the appended claims.

Embodiments of the present invention will be described in more detail below with reference to the accompanying drawings. While some embodiments of the present invention are shown in the accompanying drawings, it is to be understood that the present invention may be implemented in various forms and are not to be construed as being limited to the embodiments set forth here; rather, these embodiments are provided for a more thorough and complete understanding of the present invention. It is to be understood that the accompanying drawings and embodiments of the present invention are merely for example purposes and are not intended to limit the scope of protection of the present invention.

As used here, the term "include, and its variations are open-ended, i.e., "includes but is not limited to." The term "based on" is "based on at least in part." The term "one embodiment" means "at least one embodiment"; the term "another embodiment" means "at least one other embodiment." Relevant definitions of other terms will be given in the description below.

It is to be noted that the concepts "first," "second" and the like mentioned in the present invention are used merely to distinguish between different devices, modules or units, and are not intended to limit the order or interdependence of the functions performed by these devices, modules or units.

It is to be noted that the modifications of "one" and "a plurality of" referred to in the present invention are illustrative and not restrictive, and it is to be understood by those skilled in the art that they should be understood as "one or more" unless otherwise expressly stated in the context.

In the present invention, it is to be understood that the directional terms "upper, lower, front, back," etc. are defined based on the direction in the accompanying diagrams, are merely for convenience in describing the present invention and simplifying the description, and do not indicate or imply that the referenced devices or elements must have a particular orientation, and be constructed and operated in a particular orientation, and thus cannot be construed as limiting the present invention. For example, a vertical direction may be the same as a height direction of a table.

In the description of the present invention, it is also to be noted that, unless otherwise expressly specified and limited, the terms "provided," "connected," "connecting," and "mounted" are to be understood in a broad sense, for example, it may be a fixed connection, or a removable connection, or an integral connection; or it may be a direct connection or an indirect connection through an intermediate medium. The specific meaning of the above terms in the present invention may be understood by those of ordinary skill in the art depending on the particular circumstances.

As mentioned above, however, operations such as adjusting the height of a table in the related art are relatively complicated, and the convenience of the operations is poor.

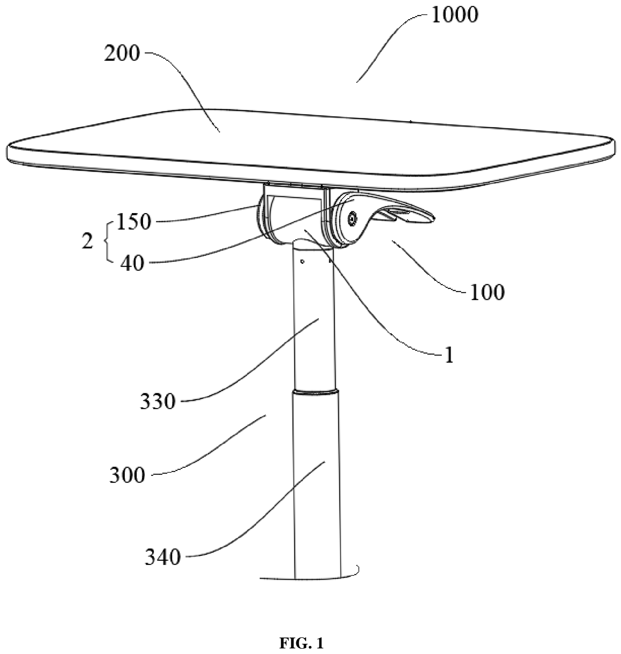

In view of this, as shown in FIG. 1 to FIG. 17, the present invention provides an adjusting mechanism 100, a table 1000 including the adjusting mechanism 100, and a vehicle 2000 including the table 1000.

The table 1000 may include a tabletop 200 and a table leg 300, and the tabletop 200 is mounted on the table leg 300 through the adjusting mechanism 100. The table 1000 may be disposed at any suitable place, such as within a passenger compartment of the vehicle.

The adjusting mechanism 100 provided by the present invention may include a first mounting bracket 10, a second mounting bracket 20, and a drive rod 30. The first mounting bracket 10 is configured to be connected to the table leg 300, and the second mounting bracket 20 is configured for mounting of the tabletop 200. The second mounting bracket 20 is configured to be rotatably connected to the first mounting bracket 10 through the drive rod 30, and the drive rod 30 is movably connected to the first mounting bracket 10 in an axial direction of the drive rod, so that the adjusting mechanism 100 is able to trigger extension and retraction of the table leg 300 in a height (e.g., vertical) direction by movement of the drive rod 30 in the axial direction of the drive rod.

The adjusting mechanism 100 integrates height adjustment and flipping functions. When the adjusting mechanism is applied to the table 1000, the height and the flipping angle of the tabletop 200 of the table 1000 can be adjusted, so that the table 1000 integrates a lifting and falling function (i.e., the height adjustment function) and the flipping function, which is conducive to enhancing user experience.

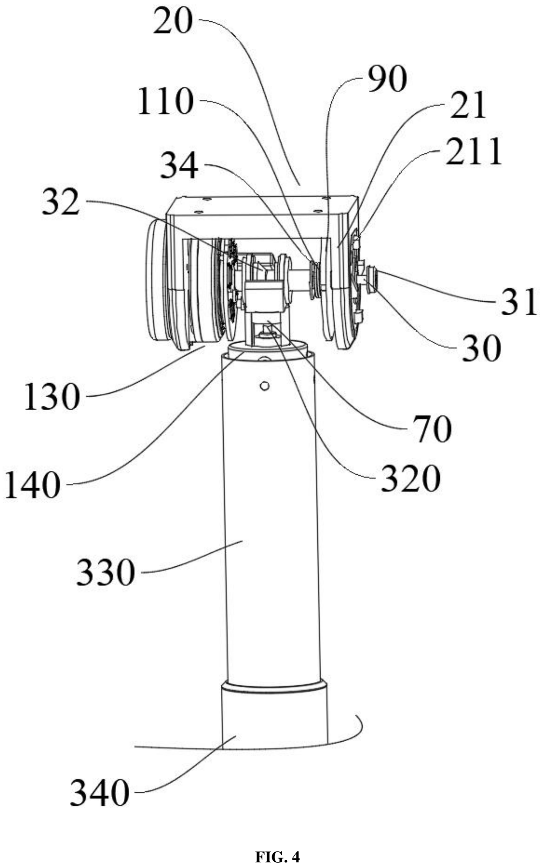

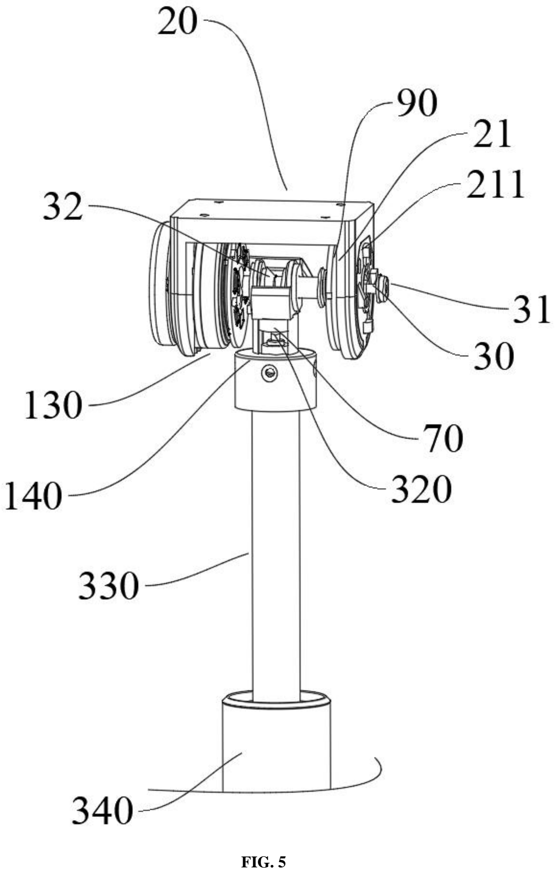

When the height of the tabletop 200 needs to be adjusted, that is, lifting and falling of the table 1000 are adjusted, the drive rod 30 may be made to move in the axial direction of the drive rod (e.g., through a height adjustment handle 140 below) to trigger the table leg 300 to extend or retract in the height direction (i.e., the height direction of the table, e.g., the vertical direction). Through extension and retraction of the table leg 300 in the height direction, the adjusting mechanism 100 and the tabletop 200 are driven to move in the height direction, then the height of the tabletop 300 is adjusted, for example, the tabletop rises from the position shown in FIG. 4 to another height, and the operation is convenient. The position of the tabletop 200 in FIG. 4 and FIG. 5 may be the lowest height position of the tabletop 200.

Additionally, since the second mounting bracket 20 is connected to the tabletop 200, and the second mounting bracket 20 may be rotatably connected to the first mounting bracket 10 through the drive rod 30, when the second mounting bracket 20 rotates around the first mounting bracket 10, the flipping angle of the tabletop 200 relative to the table leg 300 may be adjusted.

As an optional embodiment, the drive rod 30 may be arranged in a horizontal direction, that is, the axial direction of the drive rod 30 is the horizontal direction. Thus, movement of the drive rod 30 in the horizontal direction may be converted into movement of the first mounting bracket 10, the entire adjusting mechanism 100, and the tabletop 200 in the height direction.

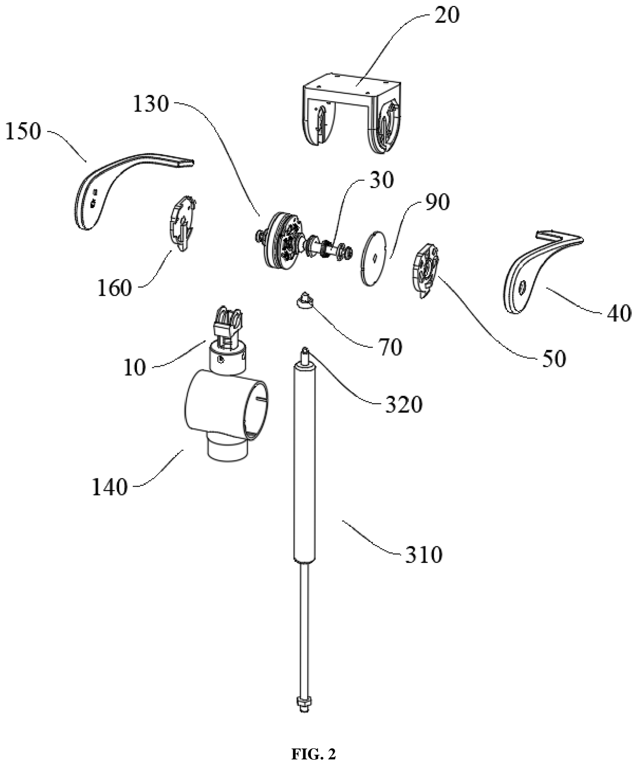

It may be understood that movement of the drive rod 30 in the axial direction of the drive rod triggering extension and retraction of the table leg 300 in the height direction may be achieved by any appropriate means. For example, as shown in FIG. 2 to FIG. 5, the table leg 300 has a telescoping trigger member 320 of a telescopic member 310 (such as an air spring) configured to drive an inner casing 330 to move relative to an outer casing 340 in the height direction of the table 1000. The drive rod 30 acts on a telescoping trigger member 320 when moving in the axial direction, so that upward extension action of the telescopic member 310 is initiated.

As shown in FIG. 1 to FIG. 5, the adjusting mechanism 100 may further include a height adjustment handle 40, and the height adjustment handle 40 is connected to a first end of the drive rod 30 away from the first mounting bracket 10. The height adjustment handle 40 is configured to make the drive rod 30 move in the axial direction of the drive rod.

Thus, when the height of the tabletop 200 needs to be adjusted, the drive rod 30 may be made move in the axial direction of the drive rod through the height adjustment handle 140 to trigger extension and retraction of the table leg 300 in the height direction (i.e., the height direction of the table). By providing the height adjustment handle 40, it is convenient for a user to move the drive rod 30 in the axial direction.

In other embodiments of the present invention, the drive rod 30 may also be made move in the axial direction of the drive rod using other means such as a linear motor. A push rod of the linear motor may be connected to the drive rod 30 to push the drive rod 30 the move in the axial direction of the drive rod.

As shown in FIG. 2, FIG. 4, and FIG. 5, the adjusting mechanism 100 may further include a pushing member 50. The pushing member 50 is connected to the second mounting bracket 20. The height adjustment handle 40 is rotatably disposed on the drive rod 30 in a sleeving manner. The first end of the drive rod 30 has an axial limiting part 31. The pushing member 50 is configured to make the drive rod 30 be able to move in the axial direction of the drive rod under the action of the axial limiting part 31 in a case of a rotation operation of the height adjustment handle 40 around the drive rod 30.

In other words, during rotation of the height adjustment handle 40, the pushing member 50 pushes the height adjustment handle 40 to move away from the pushing member 50 in the axial direction of the drive rod 30, the height adjustment handle 40 pushes the axial limiting part 31 of the drive rod 30 during movement, then the end of the drive rod 30 away from the axial limiting part 31 moves toward the pushing member 50 in the axial direction of the drive rod, and during movement of the drive rod 30, the table leg 300 is triggered to extend and retract in the height direction.

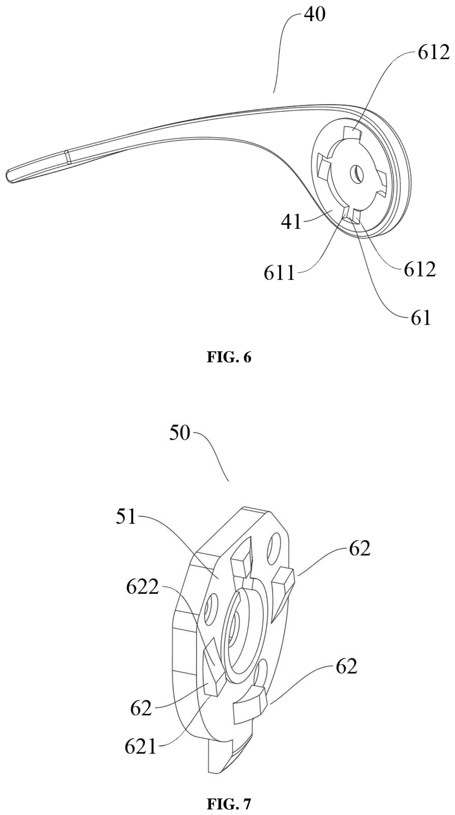

To make the pushing member 50 be able to push the height adjustment handle 40 and the drive rod 30 to move, as shown in FIG. 6 and FIG. 7, in some embodiments of the present invention, one of the height adjustment handle 40 and the pushing member 50 has at least one groove 61, while the other has at least one bump 62. The pushing member 50 is configured to be able to make the bump 62 withdraw from the groove 61 during rotation of the height adjustment handle 40 around the drive rod 30, so as to drive the drive rod 30 to move in the axial direction of the drive rod by the axial limiting part 31. For example, the pushing member 50 has a first surface 51 facing the height adjustment handle 40, and the height adjustment handle 40 has a second surface 41 facing the pushing member 50. The bumps 62 are provided on the first surface 51, and the grooves 61 are provided on the second surface 41.

With this design, during rotation of the height adjustment handle 40, as the bumps 62 withdraw from the grooves 61, the height adjustment handle 40 moves away from the pushing member 50 in the axial direction of the drive rod 30, and pushes the axial limiting part 31, so that the end of the drive rod 30 away from the axial limiting part 31 moves toward the pushing member 50 in the axial direction of the drive rod, and during movement of the drive rod 30, the table leg 300 is triggered to extend and retract in the height direction. Through the cooperation method of the grooves 61 and the bumps 62, the distance of the height adjustment handle 40 relative to the pushing member 50 in the axial direction of the drive rod 30 can be adjusted, so that the design structure that drives the axial movement of the drive rod 30, the design features a simple structure, and the operation is convenient.

In the present invention, the grooves 61 may be provided in the height adjustment handle 40, while the bumps 62 are provided on the pushing member 50; alternatively, the grooves 61 may be provided on the pushing member 50, while the bumps 62 are provided on the height adjustment handle 40, which is not limited in the present invention. As shown in FIG. 6 and FIG. 7, in some embodiments of the present invention, the grooves 61 may be provided in the height adjustment handle 40, while the bumps 62 are provided on the pushing member 50.

As shown in FIG. 6 and FIG. 7, the grooves 61 have first stop surfaces 611 and first wedge-shaped surfaces 612 that are disposed at intervals in a circumferential direction of the drive rod 30. The bumps 62 have second stop surfaces 621 and second wedge-shaped surfaces 622 that are disposed at intervals in the circumferential direction of the drive rod 30. The first stop surface 611 is configured to stop the second stop surface 621, so as to lock the bump 62 within the groove 61. The first wedge-shaped surface 612 is configured to cooperate with the second wedge-shaped surface 622 to make the bump 62 be able to withdraw from the groove 61.

With this design, the grooves 61 may lock the bumps 62 in an inserted state through the cooperation of the first stop surfaces 611 and the second stop surfaces 621, and the bumps 62 can smoothly withdraw from the grooves 61 during rotation of the height adjustment handle 40 through the cooperation of the first wedge-shaped surfaces 612 and the second wedge-shaped surfaces 622.

As shown in FIG. 6 and FIG. 7, a plurality of grooves 61 may be provided, and a plurality of bumps 62 may be provided. The plurality of grooves 61 may be provided in the height adjustment handle 40 (for example, on the second surface 41) at intervals in the circumferential direction of the drive rod 30, and the plurality of bumps 62 may be provided on the pushing member 50 (for example, on the first surface 51) at intervals in the circumferential direction of the drive rod 30. Or, the plurality of grooves 61 may be provided in the pushing member 50 (for example, on the first surface 51) at intervals in the circumferential direction of the drive rod 30, and the plurality of bumps 62 may be provided on the height adjustment handle 40 (for example, on the second surface 41) at intervals in the circumferential direction of the drive rod 30.

In some embodiments of the present invention, as shown in FIG. 7, the pushing member 50 may be constructed as a plate-like member.

As shown in FIG. 2, FIG. 5 and FIG. 9, the adjusting mechanism 100 may further include a pressure block 70. The pressure block 70 is movably connected to the first mounting bracket 10 in the height direction. The drive rod 30 has an abutting inclined surface 32. The abutting inclined surface 32 is configured to make the pressure block 70 move in the height direction during movement of the drive rod 30 in the axial direction of the drive rod, so as to press and release a telescoping locking member 320 of the telescopic member 310 (such as an air spring) of the table leg 300.

With this arrangement, movement of the drive rod 30 in the axial direction of the drive rod may be converted into downward movement of the pressure block 70, so as to trigger the telescoping locking member 320 (such as a button-type locking member). After the telescoping locking member 320 is triggered, the telescopic member 310 starts to drive the inner casing 330 of the table leg 300 to move upward along the table 1000 relative to the outer casing 340, so that the extension action is initiated, and the height of the tabletop 200 is adjusted to another position.

In the embodiment where the telescopic member 310 is an air spring, after the telescoping locking member 320 is triggered, the air spring drives the inner casing 330 of the table leg 300 to move upward along the table 1000 relative to the outer casing 340.

The specific structure and operating principle of the air spring 310 and the telescoping locking member (such as a button-type locking member) of the air spring are well known to those skilled in the art, which will not be repeated here.

In other embodiments of the present invention, the telescopic member 310 may be an electric push rod or an air cylinder structure or the like, and the telescoping locking member 320 may be a button for starting extension and retraction of a push rod of the electric push rod or a piston rod of the air cylinder structure. By triggering the button, the push rod or the piston rod may extend in the height direction of the table 1000, so as to drive the inner casing 330 of the table leg 300 to extend and retract.

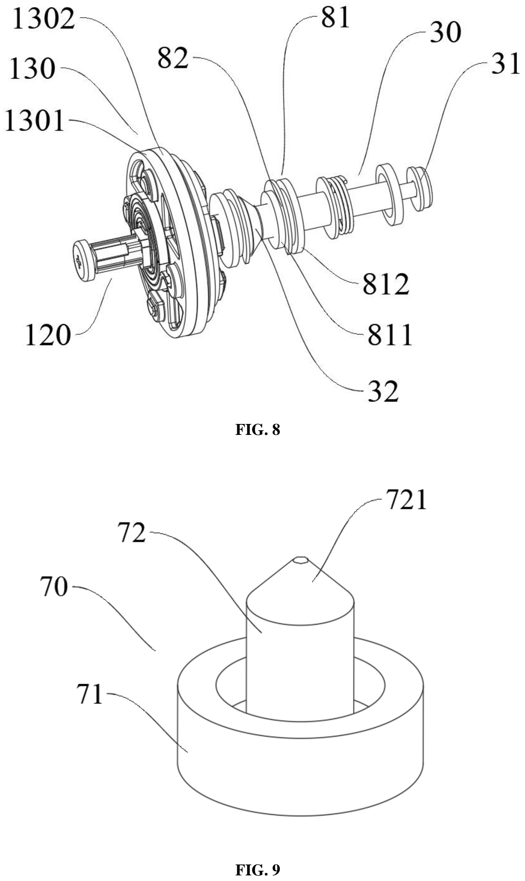

In the present invention, the drive rod 30 may form the above abutting inclined surface 32 through any appropriate structure. As shown in FIG. 8, in an embodiment of the present invention, the abutting inclined surface 32 is an arc-shaped abutting inclined surface extending in the circumferential direction of the drive rod 30. A projection of the abutting inclined surface 32 in a projection plane perpendicular to the axial direction of the drive rod 30 has a central angle greater than or equal to 90°. Thus, during rotation of the drive rod 30 around the first mounting bracket 10 (for example, during the flipping process of the tabletop 200), it can be ensured that the pressure block 70 maintains contact with the abutting inclined surface 32 while rotating at an angle of 90° or more, and the reliability of the pressure block 70 moving downward to trigger the telescoping locking member 320 is ensured.

As shown in FIG. 8, in another embodiment of the present invention, the drive rod 30 includes a conical section 33 extending in the axial direction of the drive rod 30, and a conical surface of the conical section 33 is configured as the abutting inclined surface 32. In this embodiment, since the abutting inclined surface 32 is a conical surface, during rotation of the drive rod 30 around the first mounting bracket 10, it can be ensured that the pressure block 70 always maintains contact with the abutting inclined surface 32, and the reliability of the pressure block 70 moving downward to trigger the telescoping locking member 320 is ensured.

The specific structure of the pressure block 70 is not limited in the present invention. As shown in FIG. 9, in some embodiments of the present invention, the pressure block 70 includes a slideable part 71 and an abutting column 72 disposed above the slideable part 71. The abutting column 72 has an abutting conical surface 721, and the abutting conical surface 721 is configured to cooperate with the abutting inclined surface 32. The slideable part 71 is slidably connected to the first mounting bracket 10 in the height direction.

With this design, it is convenient for the pressure block 70 to cooperate with the abutting inclined surface 32 of the drive rod 30, it is also convenient for the pressure block 70 to be connected to the first mounting bracket 10.

Furthermore, since the abutting column 72 has the abutting conical surface 721, during the abutting cooperation with the abutting inclined surface 32 of the drive rod 30, it can be ensured that the abutting column 72 always maintains contact with the drive rod 30, which is beneficial to ensuring that the pressure block 70 moves downward under the action of the drive rod 30.

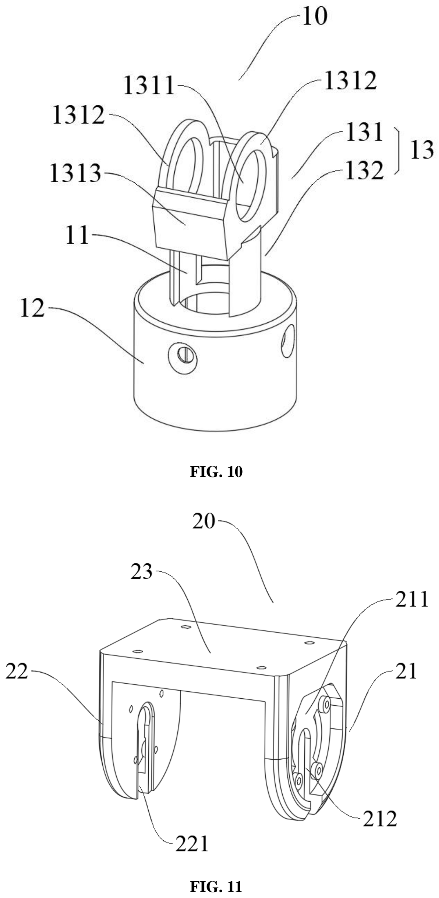

As shown in FIG. 9 and FIG. 10, the first mounting bracket 10 may be provided with a guide slot 11 extending in the height direction, and the slideable part 71 slidably cooperates with the guide slot 11. Thus, the reliability and balance of movement of the slideable part 71 on the first mounting bracket 10 are ensured.

The specific structure of the first mounting bracket 10 is not limited in the present invention. As shown in FIG. 10, the first mounting bracket 10 may include a sleeve part 12 and a mounting part 13. The sleeve part 12 is configured to be connected to the telescopic member 310 (such as an air spring 310) of the table leg 300, for example, by fastening screws. The mounting part 13 includes a first portion 131 and a second portion 132, and the second portion 132 is connected between the first portion 131 and the sleeve part 12. The pressure block 70 is movably connected to the second portion 132 in the height direction. The drive rod 30 movably penetrates through the first portion 131 in the axial direction of the drive rod. With this design, connection with the table leg 300, mounting of the drive rod 30, and cooperation with the pressure block 70 are facilitated, and interference can be avoided.

As shown in FIG. 10, the guide slot 11 may be formed in the second portion 132.

To facilitate mounting of the drive rod 30, as shown in FIG. 10, the first portion 131 includes two lugs 1312 spaced apart and a connecting plate 1313 connecting the two lugs 1312. Each of the two lugs 1312 has a mounting hole 1311, and the drive rod 30 movably penetrates through the mounting holes 1311 in the axial direction of the drive rod. By providing the two lugs 1312 spaced apart to mount the drive rod 30, the structure is simple, and better support is provided for the drive rod 30.

As shown in FIG. 4, FIG. 5, FIG. 8 and FIG. 10, the adjusting mechanism 100 may further include two socket members 81 and two clamp rings 82. The two socket members 81 are spaced apart in the axial direction of the drive rod 30, and each socket member 81 includes a socket section 811 and a limiting boss 812 connected to one end of the socket section 811. The drive rod 30 movably penetrates through the socket sections 811 in the axial direction of the drive rod, and the clamp rings 82 are clamped to the socket sections 811 of the corresponding socket members 81, i.e., the clamp rings 82 are configured to be fixed to the outer circumference of the socket sections 811 of the corresponding socket members 81. Each lug 1312 is limited between the corresponding limiting boss 812 and corresponding clamped ring 82 in the axial direction of the drive rod 30.

By providing the socket members 81, it is equivalent to providing a bushing, which facilitates protection of the drive rod 30 and the lugs 1312, and at the same time facilitates axial movement of the drive rod 30. Additionally, through the cooperation of the limiting bosses 812 of the socket members 81 and the clamp rings 82, assembly with the lugs 1312 of the first mounting bracket 10 can be achieved, and the connection between the drive rod 30 and the first mounting bracket 10 is achieved.

As shown in FIG. 4, the adjusting mechanism 100 may further include a fixed plate 90 and an elastic return member 110. The drive rod 30 movably penetrates through the fixed plate 90 in the axial direction of the drive rod. A position of the fixed plate 90 in the axial direction of the drive rod 30 is fixed. The drive rod 30 has an abutting flange 34. Two ends of the elastic return member 110 are connected to the abutting flange 34 and the fixed plate 90, respectively. The elastic return member 110 is configured to provide a return force for axial return of the drive rod 30. By providing the elastic return member 110 to provide the return force, after the height of the tabletop 200 is adjusted in place, the drive rod 30 may be automatically returned by using the elastic return member 110, which is convenient and fast.

For example, referring to FIG. 1 and FIG. 4 to FIG. 7, after the height is adjusted in place, the height adjustment handle 40 may be rotated, and is released after the bumps 61 are rotated to the grooves 61, and then the drive rod 30 is driven to axially return under the action of the elastic return member 110.

The elastic return member 110 may be of any appropriate structure. For example, the elastic return member may be an elastic sheet, or a spring as shown in FIG. 4 and FIG. 5. The spring may be disposed on the drive rod 30 in a sleeving manner, and mounting is convenient and reliable.

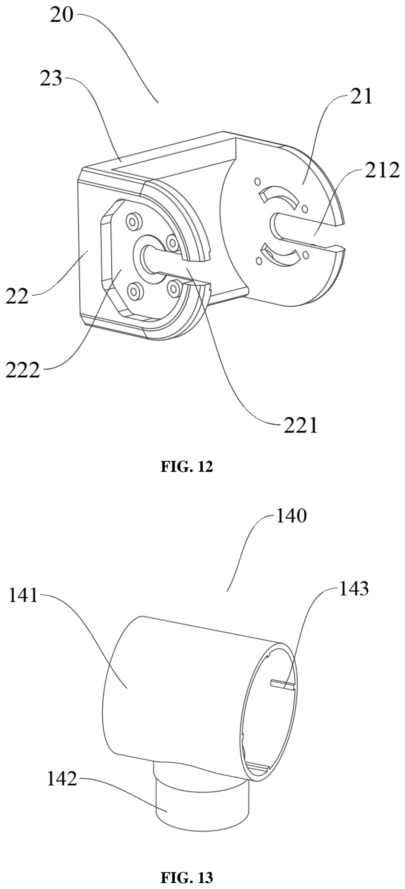

Referring to FIG. 1 and FIG. 13, the fixed plate 90 may be fixed on a first sleeve part 141 of a third mounting bracket 140 described below.

The specific structure of the second mounting bracket 20 is not limited in the present invention. As shown in FIG. 4, FIG. 5, FIG. 11, and FIG. 12, the second mounting bracket 20 may include a first connecting part 21 and a main body part 23. The main body part 23 is configured to be connected to the tabletop 200. The first connecting part 21 is connected to one end of the main body part 23, and the first connecting part 21 is rotatably connected to the first mounting bracket 10 through the drive rod 30.

During mounting, the tabletop 200 may be mounted on the main body part 23 using methods such as screwing. By rotating the first connecting part 21 relative to the drive rod 30, or by rotating the first connecting part 21 and the drive rod 30 together relative to the first mounting bracket 10, the second mounting bracket 20 may be flipped relative to the first mounting bracket 10, so that the flipping angle of the tabletop 200 is adjusted.

As shown in FIG. 4, FIG. 5, FIG. 11, and FIG. 12, the pushing member 50 may be connected to the first connecting part 21. Thus, the pushing member 50 may be connected to the tabletop 200 through the main body part 23, and cooperate with the drive rod 30 and the height adjustment handle 40 through the first connecting part 21, respectively, which is not prone to generating interference.

As shown in FIG. 11 and FIG. 12, the first connecting part 21 may has a first slot 212. The drive rod 30 is circumferentially locked and axially movably penetrates through the first slot 212, so that the first connecting part 21 can be rotatably connected to the first mounting bracket 10 through the drive rod 30. Through the cooperation of a side wall of the first slot 212 and the drive rod 30, the drive rod 30 and the first connecting part 21 may rotate together during the flipping process of the tabletop 200. A lower end of the first slot 212 may extend to a lower end face of the first connecting part 21.

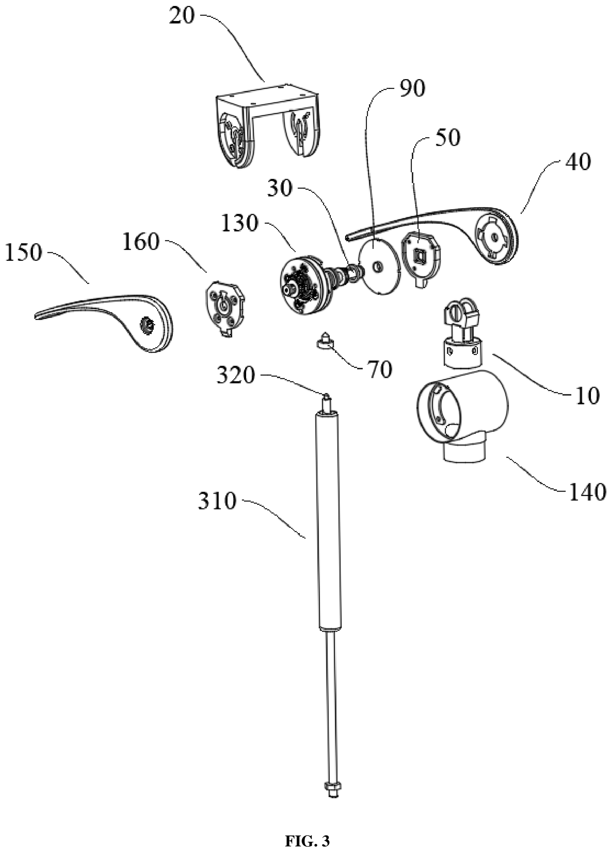

As shown in FIG. 3, FIG. 4, and FIG. 11, a side of the first connecting part 21 facing the height adjustment handle 40 has a first mounting groove 211, and at least a portion of the pushing member 50 is embedded in the first mounting groove 211. With this arrangement, during rotation of a height adjustment handle 40 around the drive rod 30, since at least a portion of the pushing member 50 is embedded in the first mounting groove 211, the pushing member 50 may be prevented from rotating around the drive rod 30 due to the limiting effect of the first connecting part 21. Furthermore, by providing the first mounting groove 211 to cooperate with the pushing member 50, the adjusting mechanism 100 can be more compact in structure, and the size can be reduced.

The pushing member 50 may be partially embedded in the first mounting groove 211 or fully embedded in the first mounting groove 211, which is not limited in the present invention. In some embodiments as shown in FIG. 4 and FIG. 11, the pushing member 50 may be fully embedded in the first mounting groove 211.

As shown in FIG. 11 and FIG. 12, the second mounting bracket 20 may further include a second connecting part 22, and the second connecting part 22 is connected to the other end of the main body part 23 and is opposite to the first connecting part 21. The adjusting mechanism 100 further includes a third mounting bracket 140 and a connecting shaft 120. The third mounting bracket 140 is configured to be connected to the inner casing 330 of the table leg 300. The connecting shaft 120 penetrates through the second connecting part 22 and is rotatably supported on the third mounting bracket 140. The second connecting part 22 is configured to be able to rotate relative to the third mounting bracket 140 through the connecting shaft 120.

During mounting, the third mounting bracket 140 is connected to the inner casing 330 of the table leg 300. With this arrangement, the first connecting part 21 and the second connecting part 22 of the second mounting bracket 20 may be supported on the drive rod 30 and the connecting shaft 120, respectively. The third mounting bracket 140 may cooperate with the first mounting bracket 10 to support two opposite ends of the second mounting bracket 20, which is beneficial to improving the reliability of support for the second mounting bracket 20.

When the flipping angle of the tabletop 200 needs to be adjusted, the flipping adjustment handle 150 may be used to drive the connecting shaft 120 to rotate relative to the third mounting bracket 140 around an axis of the connecting shaft, and drive the second connecting part 22 to rotate, so that the entire second mounting bracket 20 and the tabletop 200 are driven to flip. The second connecting part 22 may be circumferentially fixed relative to the connecting shaft 120.

As shown in FIG. 11 and FIG. 12, the second connecting part 22 has a second slot 222, and the connecting shaft 120 penetrates through the second slot 222. A lower end of the second slot 222 may extend to a lower end face of the second connecting part 22.

In the present invention, the tabletop 200 may be locked at a flipping angle requiring adjustment using any appropriate method. For example, the connecting shaft 120 may be rotatably connected to the third mounting bracket 140 with damping. Through the damped cooperation between the connecting shaft 120 and the third mounting bracket 140, the flipping angle of the second mounting bracket 20 and the tabletop 200 may be locked.

Or, as shown in FIG. 1, FIG. 2, FIG. 3, and FIG. 8, the adjusting mechanism 100 further includes a flipping adjustment module 130. The flipping adjustment module 130 is mounted on the third mounting bracket 140. The connecting shaft 120 is connected to the flipping adjustment module 130 and is unlockably circumferentially locked to the third mounting bracket 140 through the flipping adjustment module 130. By providing the flipping adjustment module 130 to cooperate with the connecting shaft 120 and the third mounting bracket 140, locking or unlocking of the second mounting bracket 20 and the tabletop 200 can be achieved. By separately providing the adjustment module 130, locking methods can be designed according to requirements.

The specific structure of the flipping adjustment module 130 is not limited in the present invention. As shown in FIG. 2, FIG. 3, FIG. 8, and FIG. 13, in some embodiments of the present invention, the flipping adjustment module 130 may include a fixed part 1302 and a movable part 1301. The fixed part 1302 is fixedly connected to the third mounting bracket 140. The connecting shaft 120 penetrates through the movable part 1301 and is retractably inserted in the fixed part 1302. The connecting shaft 120 has a first position and a second position. In the first position, the connecting shaft 120 is inserted into the fixed part 1302 to lock the movable part 1301 to the fixed part 1302. In the second position, the connecting shaft 120 is withdrawn from the fixed part 1302 and axially fixed to the movable part 1301, so that the movable part 1301 can rotate relative to the fixed part 1302. In other words, in the present invention, the connecting shaft 120 may adopt a structure similar to a hollow shaft, so that the connecting shaft 120 may be rotatably connected to the third mounting bracket 140 around the axis of the connecting shaft, and may also move in the axial direction of the connecting shaft.

When the flipping angle of the tabletop 200 needs to be adjusted, the connecting shaft 120 may be driven (e.g., rotating the flipping adjustment handle 150 below to drive the connecting shaft 120) to switch from the first position to the second position for unlocking. Thus, the flipping adjustment handle 150, the drive plate 160, the second mounting bracket 20, the connecting shaft 120, and the movable part 1301 may rotate together to achieve flipping of the tabletop 200. After the flipping is in place, the connecting shaft 120 may switch to the first position to lock the movable part 1301 to the fixed part 1302, so as to lock the connecting shaft 120 and the third mounting bracket 140, and accordingly the flipping angle of the tabletop 200 is locked.

To facilitate return of the flipping angle of the tabletop 200, the flipping adjustment module 130 may further include an elastic member. The return of the flipping angle of the tabletop 200 is achieved through the elastic member.

The operating principle of the flipping adjustment module 130 is similar to that of an angle adjusting mechanism of a backrest of a vehicle seat, which is well known to those skilled in the art, and will not be repeated here.

The specific structure of the third mounting bracket 140 is not limited in the present invention. As shown in FIG. 1, FIG. 2, FIG. 13, and FIG. 14, in some embodiments of the present invention, the third mounting bracket 140 includes a first sleeve 141 and a second sleeve 142 that are connected. The first sleeve 141 extends in the axial direction of the drive rod 30, while the second sleeve 142 extends in the height direction. An upper end of the second sleeve 142 communicates with the interior of the first sleeve 141, a lower end of the second sleeve 142 is configured to be connected to an air spring telescopic member 310 (e.g., an air spring) of the table leg 300. A portion of the first mounting bracket 10 is located inside the first sleeve 141, and the other portion is located inside the second sleeve 142. The flipping adjustment module 130 is located inside the first sleeve 141.

With this design, the first sleeve 141 and the second sleeve 142 are connected into a T-shaped sleeve, so that the adjustment module 130 is convenient to mount, and at the same time, the structure is simple. Moreover, since the first sleeve 141 is disposed on an outer side of the flipping adjustment module 130 in a sleeving manner, the aesthetic degree is high.

A portion of the first mounting bracket 10 (such as the first portion 131 of the mounting part 13 described above) may be located inside the first sleeve 141, while the other portion (such as the second portion 132 of the mounting part 13 and the sleeve part 12 described above) is located inside the second sleeve 142. Thus, the first mounting bracket 10 is convenient to mount. Moreover, since the first sleeve 141 and the second sleeve 142 are disposed on the outer side of the first mounting bracket 10 in a sleeving manner, the aesthetic degree is high.

A portion of the drive rod 30 may also be disposed inside the first sleeve 141. Since the first sleeve 141 is disposed on a portion of the outer side of the drive rod 30 in a sleeving manner, the aesthetic degree is high.

As shown in FIG. 1, FIG. 2, and FIG. 13, at least one clamping raised part 143 is provided in the first sleeve 141. The adjusting mechanism 100 further includes a fixed plate 90, and the fixed plate 90 has clamping slots. The clamping raised parts 143 are in clamping-fit with the clamping slots to achieve axial fixation of the fixed plate 90. The fixed plate 90 is configured to cooperate with the elastic return member 110 of the adjusting mechanism 100 to achieve axial return of the drive rod 30. Through cooperation between the clamping raised parts 143 and the clamping slots, the fixing reliability is high, and the structure is simple.

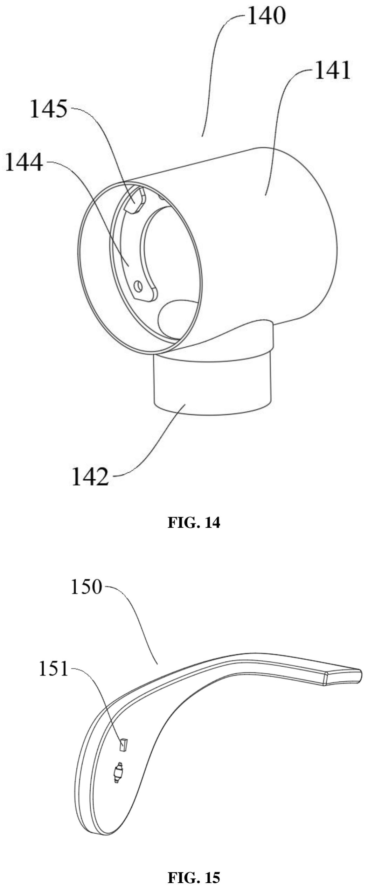

As shown in FIG. 14, a stop step 144 may be provided in the first sleeve 141. The stop step 144 is configured to axially stop the flipping adjustment module 130. The stop step 144 has a clamping tongue 145. The clamping tongue 145 is configured to be in clamping-fit with the clamping slots of the flipping adjustment module 130 to achieve circumferential fixation of the fixed part 1302 of the flipping adjustment module 130.

Thus, during the unlocking and locking process of the movable part 1301 and the fixed part 1302, the reliability of circumferential fixation of the fixed part 1302 can be ensured, so that the reliability of unlocking and locking between the movable part 1301 and the fixed part 1302 is ensured.

As shown in FIG. 1, FIG. 2, FIG. 12, FIG. 13, FIG. 15, and FIG. 16, the adjusting mechanism 100 may further include a flipping adjustment handle 150 and a drive plate 160. The flipping adjustment handle 150 is circumferentially fixedly disposed on the connecting shaft 120 in a sleeving manner, and the drive plate 160 is connected to the second connecting part 22. The flipping adjustment handle 150 is configured to drive the second connecting part 22 to rotate through the drive plate 160, and drive the connecting shaft 120 to rotate and axially move, so that the connecting shaft 120 can be circumferentially unlocked from the flipping adjustment module 130. The flipping adjustment handle 150 drives the second connecting part 22 to rotate by rotating the drive plate 160 which is an intermediate component, so as to adjust the flipping angle of the tabletop 200 relative to the table leg 300.

When the flipping angle of the tabletop 200 needs to be adjusted, the flipping adjustment handle 150 may be used to drive the connecting shaft 120 to rotate relative to the third mounting bracket 140 around the axis of the connecting shaft, and drive the second connecting part 22 to rotate, so that the second mounting bracket 20 and the tabletop 200 are driven to flip.

As shown in FIG. 1, FIG. 3, and FIG. 12, the side of the second connecting part 22 facing the flipping adjustment handle 150 may be provided with a second mounting groove 221, and at least a portion of the drive plate 160 is embedded in the second mounting groove 221. With this arrangement, when the flipping adjustment handle 150 moves the drive plate 160, since at least a portion of the drive plate 160 is embedded in the second mounting groove 221, the second connecting part 22 is driven to rotate. Moreover, by providing the second mounting groove 221 to cooperate with the drive plate 160, the adjusting mechanism 100 can be more compact in structure, and the size can be reduced.

The drive plate 160 may be partially embedded in the second mounting groove 211 or fully embedded in the second mounting groove 211, which is not limited in the present invention. **In** the embodiments shown in FIG. 3 and FIG. 12, the drive plate 160 may be fully embedded in the second mounting groove 221.

**In** the present invention, the drive plate 160 and the flipping adjustment handle 150 may be connected using any appropriate structure, as long as the flipping adjustment handle 150 can drive the drive plate 160 to rotate while rotating.

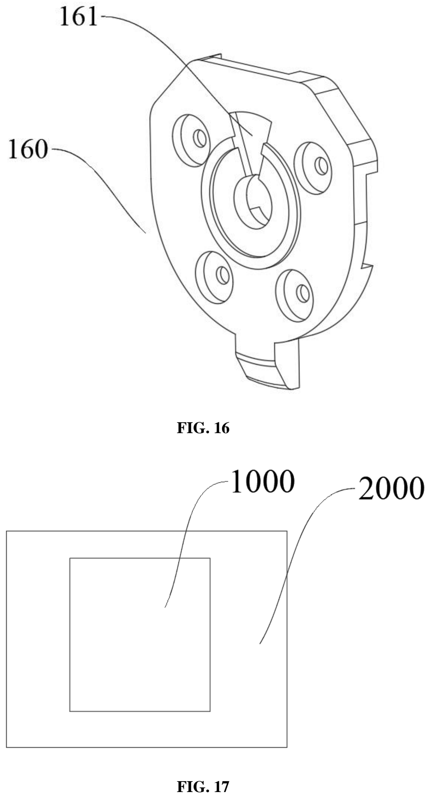

As shown in FIG. 15 and FIG. 16, in some embodiments of the present invention, one of the drive plate 160 and the flipping adjustment handle 150 has a clamping protrusion 151, and the other has a clamping recess 161. The clamping recess 161 is in clamping-fit with the clamping protrusion 151.

Since the clamping recess 161 is in clamping-fit with the clamping protrusion 151, the reliability of the flipping adjustment handle 150 driving the drive plate 160 to rotate while rotating can be ensured. Moreover, the clamping connection method achieves a simple structure and easy processing.

**In** summary, the adjusting mechanism 100 provided by the present invention may include a mechanism body 1 and an adjustment handle assembly 2. The mechanism body 1 is configured to mount the tabletop 200 on the table leg 300. The adjustment handle assembly 2 is configured to adjust extension and retraction of the table leg 300 in the height direction and the flipping angle of the tabletop 200 relative to the table leg 300. The adjustment handle assembly 2 is integrated on the mechanism body 1.

The mechanism body 1 of the present invention may include the first mounting bracket 10, the second mounting bracket 20, the drive rod 30, and other parts above of the adjusting mechanism 100 except for the height adjustment handle 40 and the flipping adjustment handle 150. The adjustment handle assembly 2 may include the height adjustment handle 40 and the flipping adjustment handle 150.

Compared to the related art where adjusting mechanisms for a height and a flipping angle of a tabletop 200 are separated, in the present invention, the adjusting mechanism 1000 integrates the adjustment handle assembly 2 to the mechanism body 1 to form one module, and the module is mounted between the tabletop 200 and the table leg 300, so that integration is high, the adjusting mechanism can be conveniently assembled to or disassembled from the tabletop 200 and the table leg 300, the size of the adjusting mechanism 1000 can also be reduced, the table 2000 has a clean appearance, and the aesthetic degree can be increased.

In other embodiments of the present invention, the adjustment handle assembly 2 may include a composite handle. The height and the flipping angle of the tabletop 200 are adjusted through the composite handle, which is not limited in the present invention.

In the table 1000 provided in the present invention, the adjusting mechanism 100 (such as the mechanism body 1) may be detachably connected to the tabletop 200, for example by screwing, and/or the adjusting mechanism 100 (such as the mechanism body 1) may be detachably connected to the table leg 300, for example by screwing. Thus, the adjusting mechanism 100, the tabletop 200, and the table leg 300 can be replaced as needed. Due to the high integration of the adjusting mechanism 100 provided in the present invention, the adjusting mechanism can be conveniently assembled to or disassembled from the tabletop 200 and the table leg 300.

The preferred embodiments of the present invention are described in detail above in combination with the accompanying drawings. However, the present invention is not limited to the specific details of the above implementations. Within the scope of the technical concept of the present invention, a variety of simple modifications can be made to the technical solutions of the present invention, and these simple modifications all belong to the protection scope of the present invention.

Additionally, it is to be noted that the specific technical features described in the above detailed implementations can be combined in any suitable way without contradiction. In order to avoid unnecessary repetition, various possible combination methods will not be described separately in the present invention.

Additionally, various different implementations of the present invention can also be combined arbitrarily, and as long as the implementations do not violate the spirit of the present invention, the implementations are also to be regarded as the contents disclosed in the present invention.

## Claims

1. An adjusting mechanism (100), comprising: a first mounting bracket (10), a second mounting bracket (20), and a drive rod (30), wherein
the first mounting bracket (10) is configured to be connected to a table leg (300), the second mounting bracket (20) is configured for mounting of a tabletop (200), and the second mounting bracket (20) is configured to be rotatably connected to the first mounting bracket (10) through the drive rod (30); and
the drive rod (30) is configured to be movably connected to the first mounting bracket (10) in an axial direction of the drive rod, so that the adjusting mechanism (100) is able to trigger extension and retraction of the table leg (300) in a height direction by movement of the drive rod (30) in the axial direction of the drive rod.

2. The adjusting mechanism (100) according to claim 1, wherein the adjusting mechanism (100) further comprises a height adjustment handle (40) connected to a first end of the drive rod (30) away from the first mounting bracket (10), and the height adjustment handle (40) is configured to make the drive rod (30) move in the axial direction of the drive rod.

3. The adjusting mechanism (100) according to claim 2, wherein the adjusting mechanism (100) further comprises a pushing member (50) connected to the second mounting bracket (20);
the height adjustment handle (40) is configured to be rotatably disposed on the drive rod (30) in a sleeving manner, and the first end of the drive rod (30) has an axial limiting part (31); and
the pushing member (50) is configured to make the drive rod (30) to be able to move in the axial direction of the drive rod under action of the axial limiting part (31) in a case of a rotation operation of the height adjustment handle (40) around the drive rod (30).

4. The adjusting mechanism (100) according to claim 3, wherein one of the height adjustment handle (40) and the pushing member (50) has at least one groove (61), and the other has at least one bump (62); and
the pushing member (50) is configured to be able to make the bump (62) withdraw from the groove (61) during rotation of the height adjustment handle (40) around the drive rod (30), so as to drive the drive rod (30) to move in the axial direction of the drive rod by the axial limiting part (31);
optionally, wherein the grooves (61) have first stop surfaces (611) and first wedge-shaped surfaces (612) that are disposed at intervals around a circumferential direction of the drive rod (30); and
the bumps (62) have second stop surfaces (621) and second wedge-shaped surfaces (622) that are disposed at intervals around the circumferential direction of the drive rod (30), wherein
the first stop surfaces (611) are configured to stop the second stop surfaces (621), so that the bumps (62) are locked within the grooves (61); and
the first wedge-shaped surfaces (612) are configured to cooperate with the second wedge-shaped surfaces (622), so that the bumps (62) are able to withdraw from the grooves (61).

5. The adjusting mechanism (100) according to any one of claims 1 to 4, wherein the adjusting mechanism (100) further comprises a pressure block (70), and the pressure block (70) is configured to be movably connected to the first mounting bracket (10) in the height direction; and
the drive rod (30) has an abutting inclined surface (32), and the abutting inclined surface (32) is configured to make the pressure block (70) move in the height direction during axial movement of the drive rod (30) in the axial direction of the drive rod, so as to press and release a telescoping locking member (320) of a telescopic member (310) of the table leg (300);
optionally, wherein the abutting inclined surface (32) is an arc-shaped abutting inclined surface extending in the circumferential direction of the drive rod (30), and a projection of the abutting inclined surface (32) in a projection plane perpendicular to the axial direction of the drive rod (30) has a central angle greater than or equal to 90°; or
the drive rod (30) comprises a conical section (33) extending in the axial direction of the drive rod (30), and a conical surface of the conical section (33) is constructed as the abutting inclined surface (32).

6. The adjusting mechanism (100) according to claim 5, wherein the pressure block (70) comprises a slideable part (71) and an abutting column (72) disposed above the slideable part (71);
the abutting column (72) has an abutting conical surface (721), and the abutting conical surface (721) is configured to cooperate with the abutting inclined surface (32); and
the slideable part (71) is slidably connected to the first mounting bracket (10) in the height direction;
optionally, wherein the first mounting bracket (10) has a guide slot (11) extending in the height direction, and the slideable part (71) slidably cooperates with the guide slot (11).

7. The adjusting mechanism according to claim 5 or 6, wherein the first mounting bracket (10) comprises a sleeve part (12) and a mounting part (13), and the sleeve part (12) is configured to be connected to the telescopic member (310) of the table leg (300);
the mounting part (13) comprises a first portion (131) and a second portion (132) connected between the first portion (131) and the sleeve part (12), and the pressure block (70) is movably connected to the second portion (132) in the height direction; and
the drive rod (30) movably penetrates through the first portion (131) in the axial direction of the drive rod;
optionally, wherein the first portion (131) comprises two lugs (1312) spaced apart and a connecting plate (1313) connecting the two lugs (1312);
each of the two lugs (1312) has a mounting hole (1311); and
the drive rod (30) movably penetrates through the mounting holes (1311) in the axial direction of the drive rod;
optionally, wherein the adjusting mechanism (100) further comprises two socket members (81) and two clamp rings (82);
the two socket members (81) are spaced apart in the axial direction of the drive rod (30), each socket member (81) comprises a socket section (811) and a limiting boss (812) connected to one end of the socket section (811), and the drive rod (30) movably penetrates through the socket sections (811) in the axial direction of the drive rod; and
the clamp rings (82) are configured to be fixed to the outer circumference of the socket sections (811) of the corresponding socket members (81), and each lug (1312) is configured to be limited between the corresponding limiting boss (812) and the corresponding clamped ring (82) in the axial direction of the drive rod (30).

8. The adjusting mechanism (100) according to any one of claims 1-7, wherein the adjusting mechanism (100) further comprises a fixed plate (90) and an elastic return member (110);
the drive rod (30) movably penetrates through the fixed plate (90) in the axial direction of the drive rod, and a position of the fixed plate (90) in the axial direction of the drive rod (30) is fixed;
the drive rod (30) has an abutting flange (34), and two ends of the elastic return member (110) are configured to be connected to the abutting flange (30) and the fixed plate (90), respectively; and
the elastic return member (110) is configured to provide a return force for the drive rod (30) to return in the axial direction.

9. The adjusting mechanism (100) according to any one of claims 1 to 8, wherein the second mounting bracket (20) comprises a first connecting part (21) and a main body part (23);
the main body part (23) is configured to be connected to the tabletop (200);
the first connecting part (21) is configured to be connected to one end of the main body part (23); and
the first connecting part (21) is configured to be rotatably connected to the first mounting bracket (10) through the drive rod (30).

10. The adjusting mechanism (100) according to claim 9, wherein the adjusting mechanism (100) further comprises a height adjustment handle (40) and a pushing member (50);
the pushing member (50) is configured to be connected to the first connecting part (21); and
the pushing member (50) is configured to make the drive rod (30) be able to move in the axial direction of the drive rod in a case of the rotation operation of the height adjustment handle (40) around the drive rod (30);
optionally, wherein the first connecting part (21) has a first slot (212); and
the drive rod (30) is configured to be circumferentially locked and axially movably penetrates through the first slot (212), so that the first connecting part (21) is able to be rotatably connected to the first mounting bracket (10) through the drive rod (30).

11. The adjusting mechanism (100) according to claim 9 or 10, wherein the second mounting bracket (20) further comprises a second connecting part (22) connected to the other end of the main body part (23) and opposite to the first connecting part (21);
the adjusting mechanism (100) further comprises a third mounting bracket (140) and a connecting shaft (120), and the third mounting bracket (140) is configured to be connected to an inner casing (330) of the table leg (300); and
the connecting shaft (120) penetrates through the second connecting part (22) and is configured to be rotatably supported on the third mounting bracket (140), and the second connecting part (22) is configured to be able to rotate relative to the third mounting bracket (140) through the connecting shaft (120).

12. The adjusting mechanism (100) according to claim 11, wherein the adjusting mechanism (100) further comprises a flipping adjustment module (130), and the flipping adjustment module (130) is on the third mounting bracket (140); and
the connecting shaft (120) is configured to be connected to the flipping adjustment module (130) and is configured to be unlockably circumferentially locked to the third mounting bracket (140) through the flipping adjustment module (130);
optionally, wherein the adjusting mechanism (100) further comprises a flipping adjustment handle (150) and a drive plate (160);
the flipping adjustment handle (150) is configured to be circumferentially fixedly disposed on the connecting shaft (120) in a sleeving manner, and the drive plate (160) is configured to be connected to the second connecting part (22); and
the flipping adjustment handle (150) is configured to be able to drive the second connecting part (22) to rotate through the drive plate (160), and to drive the connecting shaft (120) to rotate and axially move, so that the connecting shaft (120) is able to be circumferentially unlocked from the flipping adjustment module (130).

13. The adjusting mechanism (100) according to claim 12, wherein the third mounting bracket (140) comprises a first sleeve (141) and a second sleeve (142) that are connected, and the first sleeve (141) extends in the axial direction of the drive rod (30);
the second sleeve (142) extends in the height direction, an upper end of the second sleeve (142) communicates with an interior of the first sleeve (141), and a lower end of the second sleeve (142) is configured to be connected to a telescopic member (310) of the table leg (300);
a portion of the first mounting bracket (10) is located in the first sleeve (141), and the other portion is located in the second sleeve (142); and
the flipping adjustment module (130) is located in the first sleeve (141);
optionally, wherein at least one clamping raised part (143) is in the first sleeve (141); and
the adjusting mechanism (100) further comprises a fixed plate (90), the fixed plate (90) has a clamping slot, and the clamping raised part (143) is in clamping-fit with the clamping slot to achieve axial fixation of the fixed plate (90), wherein the fixed plate (90) is configured to cooperate with an elastic return member (110) of the adjusting mechanism (100) to achieve axial return of the drive rod (30);
optionally, wherein a stop step (144) is in the first sleeve (141), and the stop step (144) is configured to axially stop the flipping adjustment module (130); and
the stop step (144) has a clamping tongue (145), and the clamping tongue (145) is configured to be in clamping-fit with a clamping slot of the flipping adjustment module (130) to achieve circumferential fixation of a fixed part (1302) of the flipping adjustment module (130).

14. A table (1000), comprising a tabletop (200), a table leg (300), and the adjusting mechanism (100) according to any one of claims 1 to 13, wherein
the first mounting bracket (10) is configured to be connected to the table leg (300), and the tabletop (200) is on the second mounting bracket (20).

15. A vehicle (2000), comprising the table (1000) according to claim 14.
